# EUROPEAN PATENT APPLICATION

(11) **EP 1 860 484 A1**
(43) Date of publication of application: **28.11.2007**
(21) Application number: 06013835.1
(22) Date of filing: 04.07.2006
(51) Int. Cl.: G02C 11/02

(54) **Spectacles and ornament assembly**

(30) Priority: 24.05.2006 KR 20060046565
(71) Applicant: Lee, Suk Jae, Daegu (KR); Lee, Ju-Jae, 1190 Jisan-Dong Susung-Gu Daegu (KR); Lee, Hyun-Jun, Buk-Gu Daegu (KR); Lee, Sung-Jun, 1190 Jisan-Dong Susung-Gu Daegu (KR)
(72) Inventor: Lee, Suk Jae, Daegu (KR); Lee, Ju-Jae, 1190 Jisan-Dong Susung-Gu Daegu (KR); Lee, Hyun-Jun, Buk-Gu Daegu (KR); Lee, Sung-Jun, 1190 Jisan-Dong Susung-Gu Daegu (KR)
(74) Representative: Beetz & Partner

(57) **Abstract**

Disclosed herein is a spectacles and ornament assembly. The assembly comprises spectacles including a spectacle frame (1) having a bridge connecting a pair of lens frames to each other, and a pair of temple arms connected to the spectacle frame, and at least one ornament selected from among a variety of ornaments having different shapes, designs, colors, and materials.

Also, a plurality of magnets (M1, M2, M3, M4..m1, m2, m3, m4..) are provided at corresponding positions of the spectacle frame(1) or each hinge (15) and the ornament to detachably attach the ornament to the spectacle frame(1) or each hinge(15), so as to achieve a variety of spectacle configurations in accordance with the wearer's different tastes.

## Description

### BACKGROUND OF THE INVENTION

### Field of the Invention

The present invention relates to a spectacles and ornament assembly, and more particularly, to a spectacles and ornament assembly in which a variety of ornaments, having different shapes, colors, and materials, are selectively added to spectacles, thereby providing the spectacles with increased decorative effect for satisfying various wearer's tastes.

### Description of the Related Art

Conventionally, spectacles have a spectacle frame made of a single material. First of all, the spectacle frame has a definitive shape and design selected arbitrarily by manufactures.

In a recent tendency, spectacles are widely used as fashion accessories as well as means for correcting the wearer's defective vision, and the use of spectacles having non-prescription lenses is gradually increasing.

However, in the case of conventional spectacle frames having definitive designs as described above, they have a difficulty to exhibit characteristics of various fashion accessories. Accordingly, to selectively wear desired spectacles suitable for his/her clothes and style, a wearer has to prepare numbers of spectacles, and therefore, suffers from an increase in economic burden. Furthermore, even if numbers of spectacles are prepared, it is impossible for the wearer to change a definitive design of spectacles, and there is a problem to utilize spectacles as desired appropriate fashion accessories.

### SUMMARY OF THE INVENTION

Therefore, the present invention has been made in view of the above problems, and it is an object of the present invention to provide a spectacles and ornament assembly in which a variety of ornaments having different shapes, colors, and materials are selectively combined and attached to a frame of spectacles based on the wearer's various tastes, thereby allowing the spectacles to be used as a fashion accessory.

It is another object of the present invention to provide a spectacles and ornament assembly which uses a variety of magnets as means for attaching at least one ornament to a frame of spectacles.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a perspective view of a spectacles and ornament assembly according to a first embodiment of the present invention, prior to attaching an ornament;
FIG. 2 is a perspective view of a spectacles and ornament assembly according to a second embodiment of the present invention, prior to attaching an ornament;
FIG. 3 is a perspective view of a spectacles and ornament assembly according to a third embodiment of the present invention, prior to attaching an ornament;
FIG. 4 is a perspective view of a spectacles and ornament assembly according to a fourth embodiment of the present invention, prior to attaching an ornament;
FIG. 5 is a perspective view of a spectacles and ornament assembly according to a fifth embodiment of the present invention, prior to attaching an ornament;
FIGS. 6 to 8 are sectional views taken along the line A-A and B-B of FIG. 1, illustrating different mounting configurations of each magnet included in the spectacles and ornament assembly according to each embodiment of the present invention;
FIG. 9 is a partial perspective view of a spectacles and ornament assembly according to a sixth embodiment of the present invention, prior to attaching an ornament;
FIG. 10 is a perspective view of a spectacles and ornament assembly according to a seventh embodiment of the present invention, prior to attaching an ornament;
FIG. 11 is a partial perspective view of a spectacles and ornament assembly according to an eighth embodiment of the present invention, prior to attaching an ornament, but the circle being a longitudinal sectional view illustrating a state after attaching an ornament to spectacles;
FIG. 12 is a perspective view of a spectacles and ornament assembly according to a ninth embodiment of the present invention, prior to attaching an ornament;
FIG. 13 is a perspective view of the spectacles and ornament assembly of FIG. 12, after attaching the ornament to spectacles;
FIG. 14 is a perspective view of a spectacles and ornament assembly according to a tenth embodiment of the present invention, prior to attaching an ornament; and
FIG. 15 is a perspective view of a spectacles and ornament assembly according to an eleventh embodiment of the present invention, prior to attaching an ornament.

### DESCRIPTION OF THE PREFERRED EMBODIMENTS

Now, a spectacles and ornament assembly according to preferred embodiments of the present invention will be described in detail with reference to the annexed drawings.

In the following description, since left and right sides of a spectacle frame receiving a pair of lenses are symmetrical, only one side will be designated by reference numerals. Further, although the respective drawings illustrate different shapes of spectacles, corresponding members thereof will be designated by the same reference numerals.

First, considering the configuration of a representative one of a variety of spectacle frames, a spectacle frame 1 basically includes a pair of lens frames receiving a pair of spectacle lenses 11 and 11', respectively, and a bridge 12 connected between the pair of lens frames. Also, a pair of temple arms 10 are connected to opposite outer ends of the spectacle frame 1, respectively. Here, the temple arms 10 may be integrally formed with the frame 1 or may be separately connected thereto by use of hinges.

As described in the introduction of the present invention, spectacles 50 having the above described basic configuration have several problems due to a definitive design selected by manufacturers.

The present invention relates to a spectacles and ornament assembly capable of achieving a variety of designs and colors by attaching at least one ornament, which is selected based on the wearer's taste, to the spectacles 50. In the following description, a variety of ornaments are exemplified throughout several embodiments, but the present invention is not limited thereto. Accordingly, it should be understood that the same technical feature can be obtained from all shapes of ornaments attachable to spectacles by use of magnets.

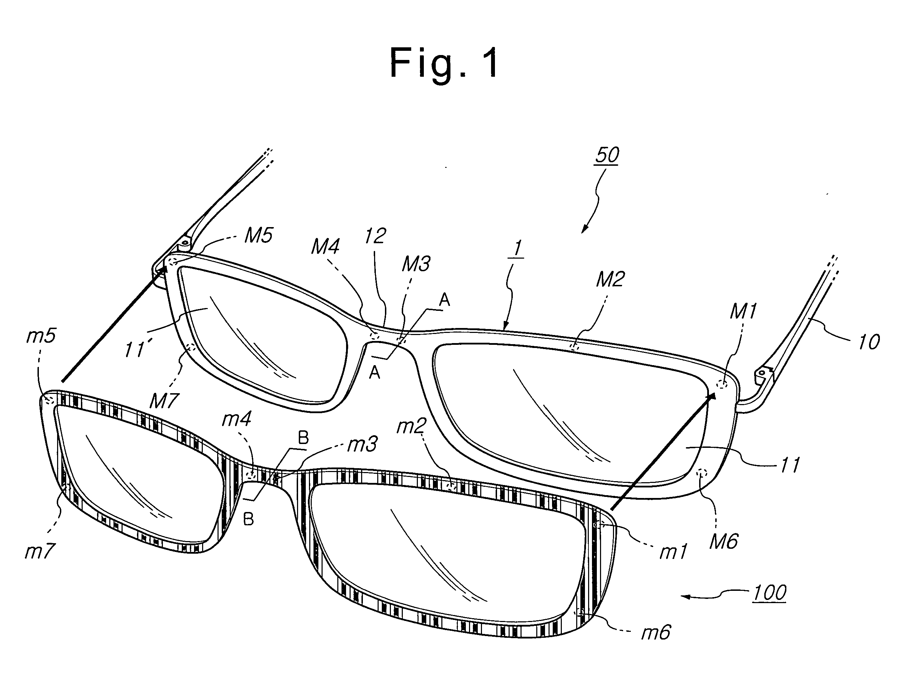

Referring to FIG. 1 illustrating a first embodiment of the present invention, a plurality of magnets M1, M2, M3, M4, M5, ... are uniformly distributed and fixedly mounted in the spectacle frame 1 so as to be used as attachment means. With the use of the magnets, a magnetically attractable ornamental frame 100 is able to be detachably attached to the spectacles 50, to complete a spectacles and ornament assembly.

As shown in FIG. 1, the ornamental frame 100 has a simplified configuration having no lenses, and is configured to have a different shape, design, color, and material from those of the basically provided spectacle frame 1. Similarly, a plurality of magnets m1, m2, ... Mn are uniformly distributed and fixedly mounted in the ornamental frame 100 at selected positions corresponding to the magnets M1, M2, ... Mn of the spectacle frame 1, so as to allow the ornamental frame 100 to be detachably attached to the spectacle frame 1.

With the above described configuration, when the wearer tries to change the shape, color, or the like of the spectacles 50, the ornamental frame 100 is able to be attached to the basic design of the spectacle frame 1 by use of a magnetic force of the plurality of magnets.

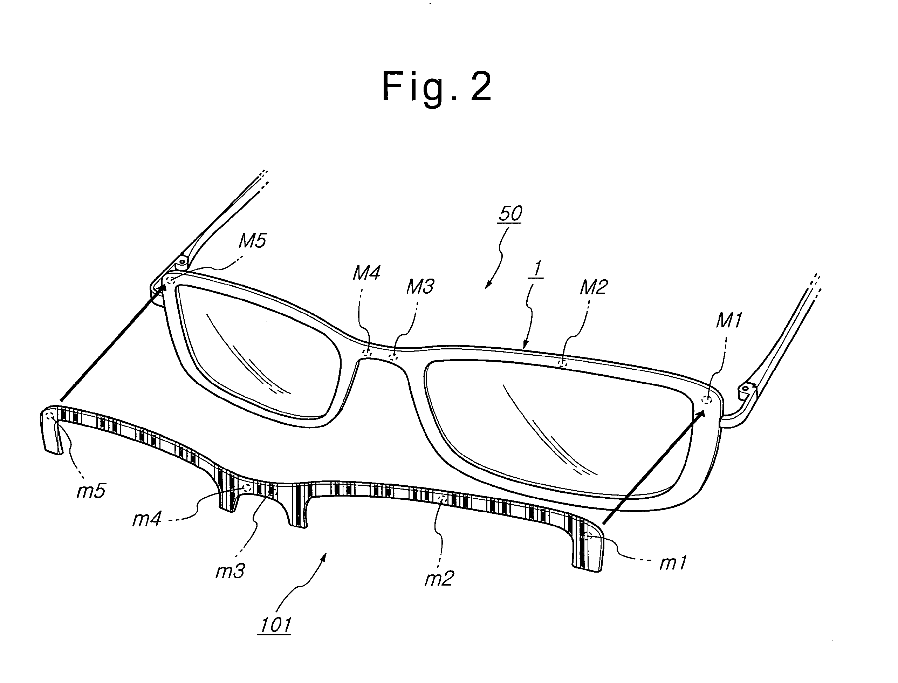

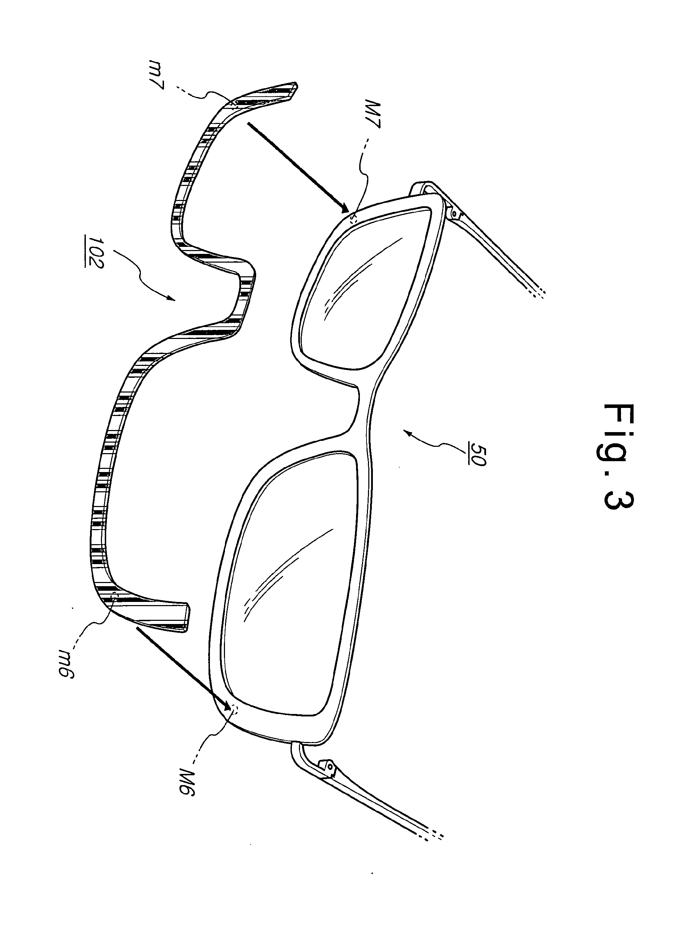

FIGS. 2 and 3 illustrate different modified configurations of the ornamental frame according to second and third embodiments of the present invention. Specifically, an ornamental frame 101 of the second embodiment has a shape corresponding to an upper portion of the spectacle frame 1, and an ornamental frame 102 of the third embodiment has a shape corresponding to a lower portion of the spectacle frame 1. In these embodiments, a reduced number of magnets may be selectively provided.

Accordingly, by selectively combining and attaching the ornamental frames 100, 101 and 102 having the above described configurations to the spectacle frame 1, the resulting single spectacles 50 can achieve a variety of decorative styles and effects.

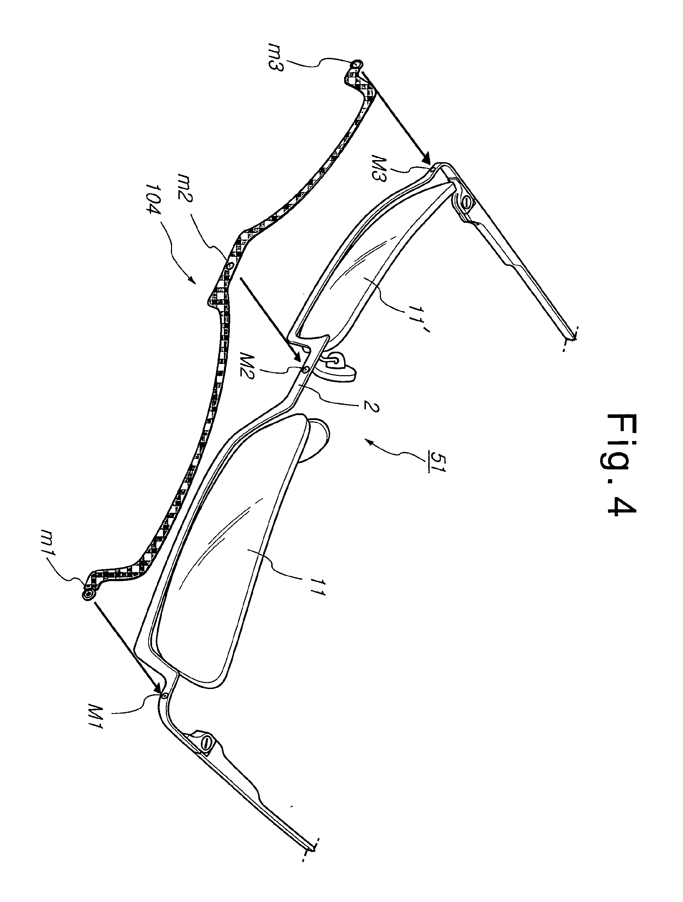

Referring to FIG. 4 illustrating a fourth embodiment of the present invention, spectacles 51 include a spectacle frame 2, which has no upper portion and is configured to receive the pair of spectacle lenses 11 and 11' with a lower portion thereof, whereas an ornamental frame 104 to be attached to the spectacles 51 is configured to have no lower portion.

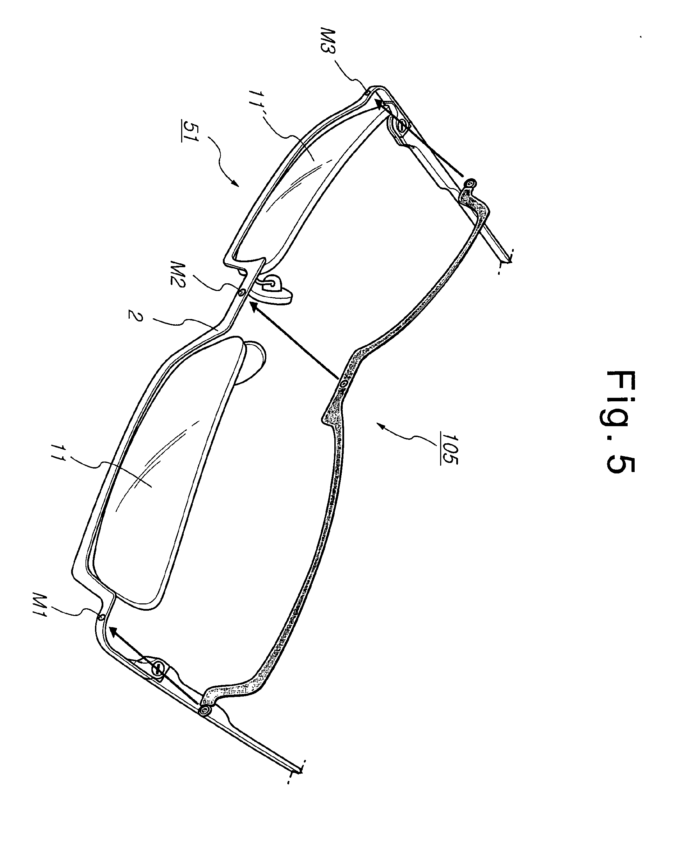

Referring to FIG. 5 illustrating a fifth embodiment of the present invention, to be attached to the spectacles 51, an ornamental frame 105 having no lower portion is provided. The ornamental frames 104 and 105 of the fourth and fifth embodiments have a similar shape, but have different colors and materials from each other. The ornamental frames 104 and 105 having no lower portion are able to be attached to the spectacle frame 2 having no upper portion, from a front or rear side of the spectacles 51, by use of the plurality of magnets, for example, three pairs of magnets M1 and m1, M2 and m2, and M3 and m3.

In the fourth and fifth embodiments of the present invention, two or more ornamental frames 104 and 105 having different colors may be combined to provide the resulting spectacles 51 with a variety of color combinations in accordance with the wearer's taste.

Now, different mounting configurations of the magnets M1, M2, ... Mn of the spectacle frame and the magnets m1, m2, ... mn of the ornamental frame will be explained.

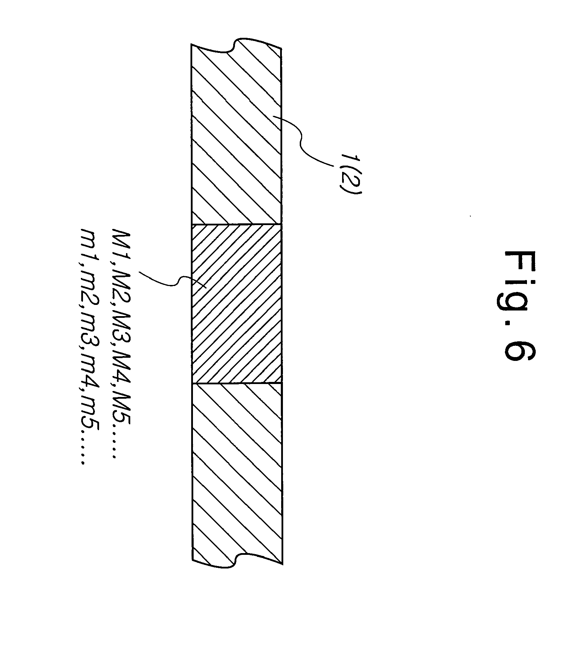

Referring to FIG. 6, each magnet may be inserted to penetrate through the spectacle frame or ornamental frame.

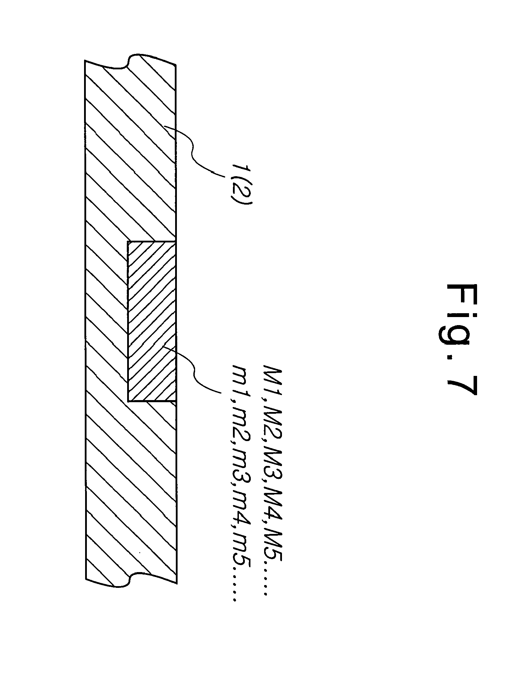

Referring to FIG. 7, each magnet may be partially inserted to be exposed to the outside only from the front side of the spectacle frame or ornamental frame.

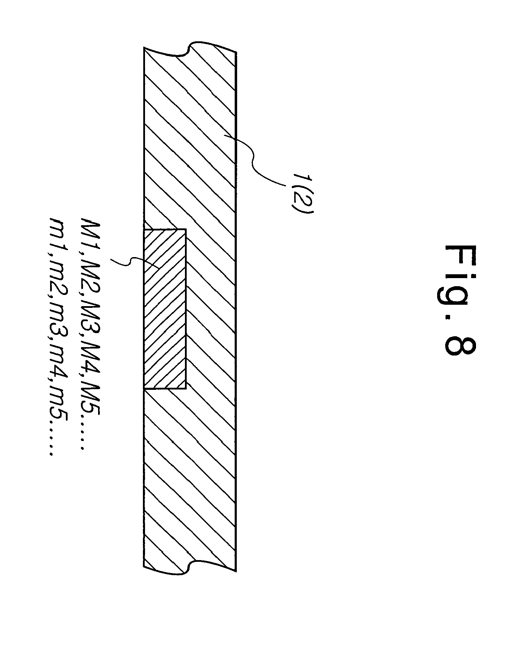

Referring to FIG. 8, each magnet may be partially inserted to be exposed to the outside only from the rear side of the spectacle frame or ornamental frame.

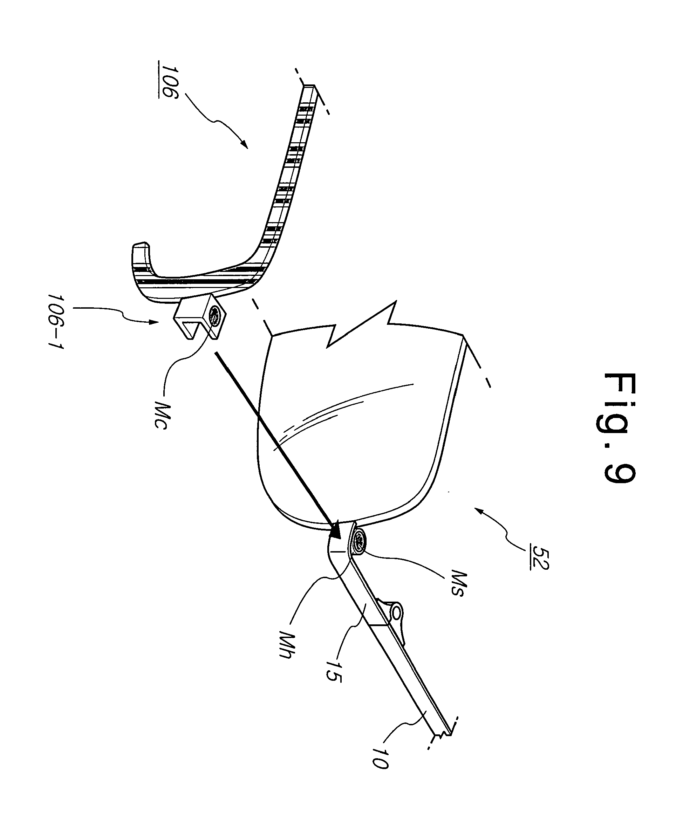

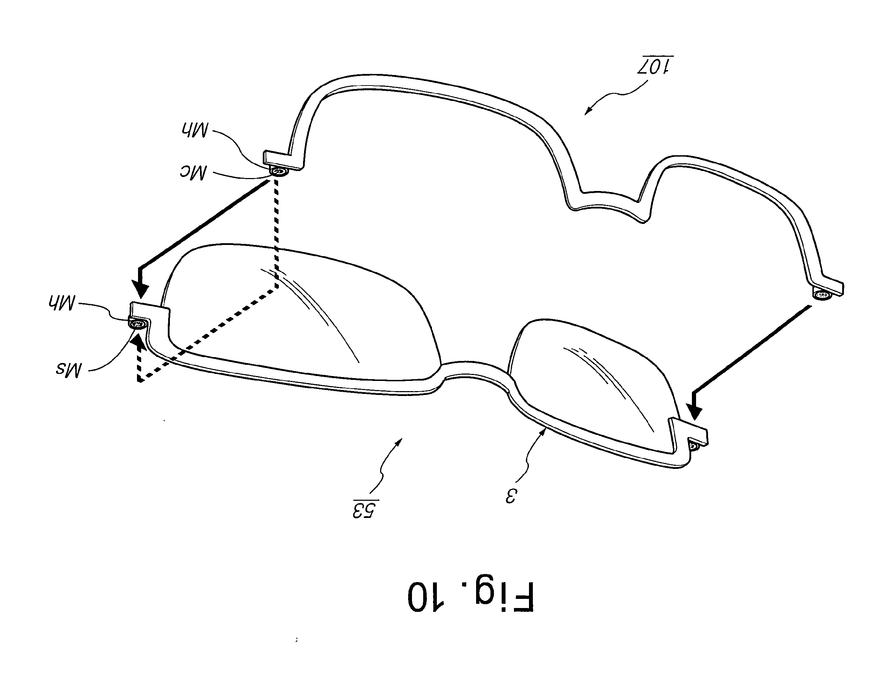

The drawings of the above described embodiments illustrate a horizontal attachment between the corresponding magnets of the spectacle frame and the ornamental frame, where FIGS. 9 and 10 illustrate a vertical attachment between the corresponding magnets.

First, referring to FIG. 9 illustrating a sixth embodiment of the present invention, in the case of frameless spectacles 52 in which each temple arm 10 is connected to an outer end of an associated spectacle lens by interposing a hinge 15, a magnet holder Mh is mounted to a rear surface of the hinge 15, and a magnet Ms is vertically inserted into a hole defined in the magnet holder Mh. Although not shown, it will be understood that the magnet holder Mh may be mounted to a front surface of the hinge 15. In the present embodiment, to correspond to the frameless spectacles 52, an ornamental frame 106 has an approximately U-shaped insert 106-1 having an open rear end. The insert 106-1 of the ornamental frame 106 is positioned to correspond to the magnet holder Mh, and a pair of magnets mc inserted in upper and lower pieces thereof. With this configuration, the magnets mc of the ornamental frame 106 are able to be vertically attached to upper and lower ends of the magnet Ms of the spectacles 52.

Referring to FIG. 10 illustrating a seventh embodiment of the present invention, spectacles 53 include a pair of temple arms (not shown) and a spectacle frame 3, which has no lower portion and is configured to hold the pair of spectacle lenses 11 and 11' with an upper portion thereof, whereas an ornamental frame 107 to be attached to the spectacles 53 is configured to have no upper portion. In the present embodiment, the spectacle frame 3 is provided at an either lateral end thereof with the magnet holder Mh for receiving the magnet Ms, whereas the ornamental frame 107 is provided at an either lateral end thereof with a magnet holder mh for receiving the magnet mc. With this arrangement, the magnet mh is able to be vertically attached to a lower end of the magnet Ms.

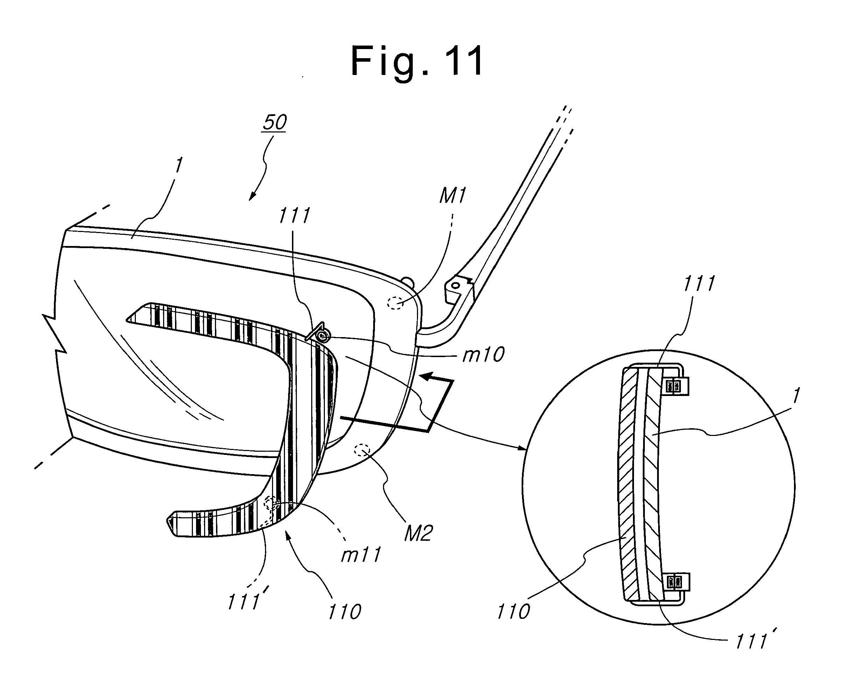

Referring to FIG. 11 illustrating an eighth embodiment of the present invention, an ornamental frame 110 to be attached to the spectacle frame 1 has a shape corresponding to a vertically cut lateral portion of the spectacle frame 1. The ornamental frame 110 is provided, at upper and lower edges of an either lateral end thereof, with rearwardly extending upper and lower legs 111 and 111', and magnets m10 and m11 are inserted into the legs 111 and 111', respectively. As the magnets m10 and m11 are magnetically attached to the magnets M1 and M2 of the spectacle frame 1 to attach the ornamental frame 110 to a predetermined portion of the spectacle frame 1, the resulting spectacles 50 can achieve a partial change in design and color thereof.

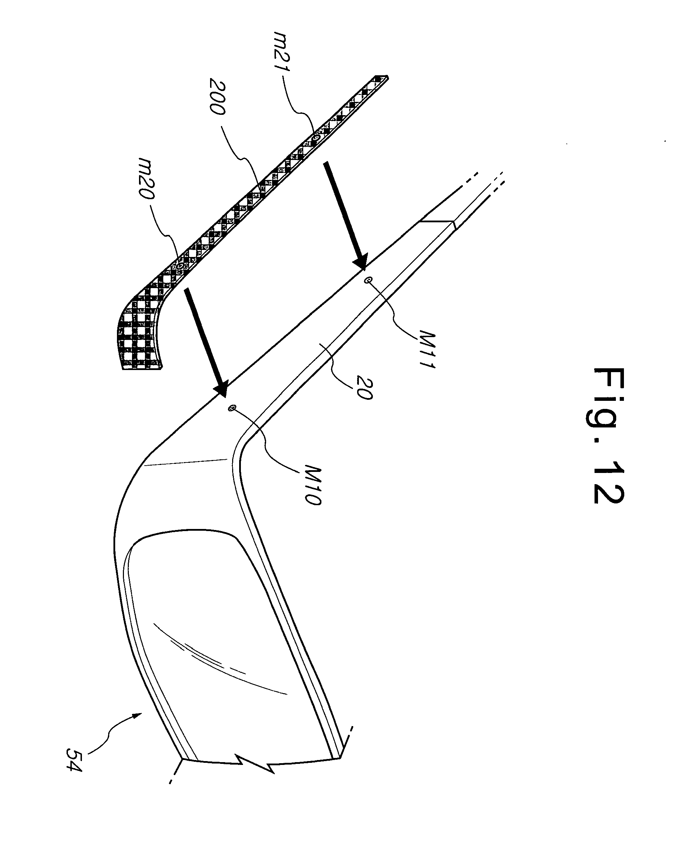

FIG. 12 illustrates a ninth embodiment of the present invention, which is applicable to spectacles 54 having relatively wide plate-shaped temple arms 20 within the spirit of the present invention.

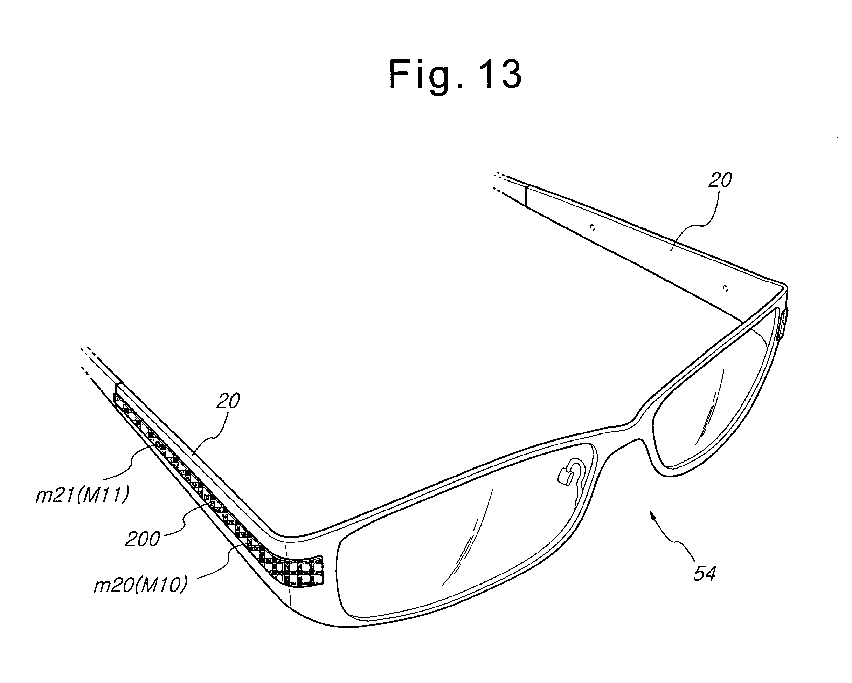

In the present embodiment, a temple arm ornament 200 is provided to be attached to each temple arm 20 of the spectacles 54. The shape of the temple arm ornament 200 is not limited to a certain shape, but is able to be freely selected from among a variety of shapes such as a stripe, flower, popular character, and the like. For the sake of attachment, a plurality of magnets M10 and M11 are inserted into each temple arm 20, and a plurality of magnets m20 and m21 are inserted into the temple arm ornament 200. With this configuration, as the temple arm ornament 200 is detachably attached to the associated temple arm 20 as shown in FIGS. 12 and 13, the temple arm 20 can achieve a free change in design and color thereof.

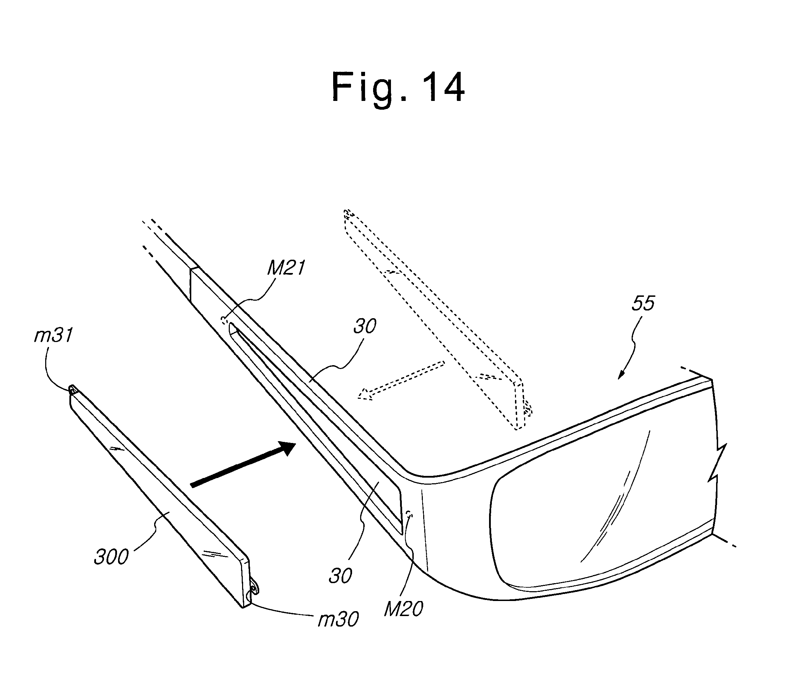

Referring to FIG. 14 illustrating a tenth embodiment of the present invention, spectacles 55 include a relatively wide plate-shaped temple arm 30 having an elongated longitudinal slit 31 perforated therein, and a plurality of magnets M20 and M21 are arranged around the slit 31.

In the present embodiment, a temple arm ornament 300 is configured to have a shape corresponding to that of the slit 31, and is made of a colored glass or plastic material. To correspond to the magnets M20 and M21, a plurality of magnets m30 and m31 are inserted into specific locations of the temple arm ornament 300. With this configuration, the temple arm ornament 300 is able to be detachably attached to the temple arm 30 of the spectacles 55 in accordance with the wearer's taste, to change the original design of the temple arm 30. In FIG. 14, an imaginary configuration shown as a dotted line illustrates that the temple arm ornament 300 may be attached inside of the temple arm 30.

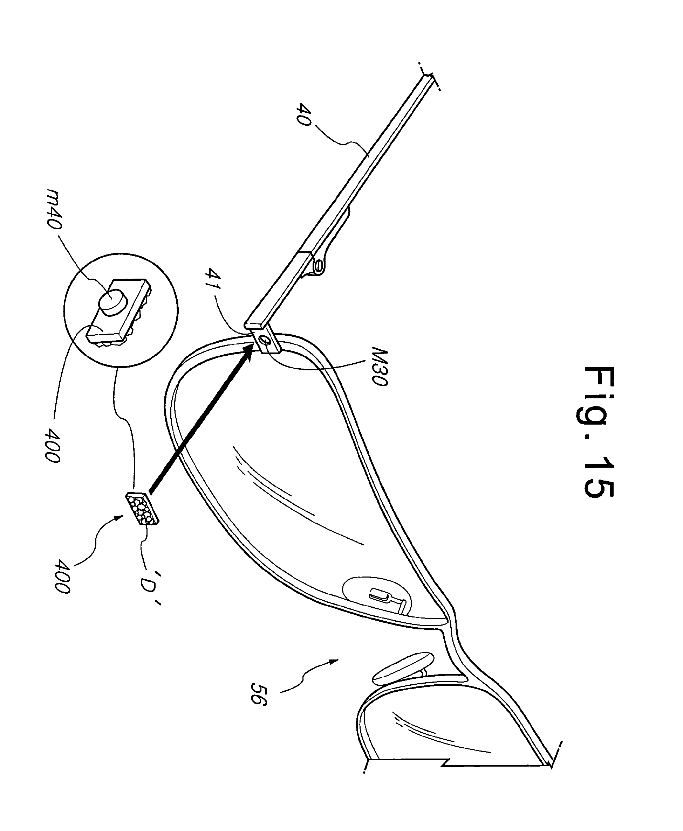

Finally, referring to FIG. 15 illustrating an eleventh embodiment of the present invention, spectacles 56 include a pair of hinges 41 to connect a pair of temple arms 40 to a spectacle frame, and magnets M30 are inserted into front surfaces of the hinges 41, respectively. In the present embodiment, a hinge ornament 400 having a magnet m40 inserted in a rear surface thereof is provided such that it is able to be detachably attached to the hinge 41 of the spectacles 56 via cooperation of the magnets m40 and M30. The hinge ornament 400 has an ornamental front surface made of a colored sheet, artificial jewel, or other decorative materials, to achieve an increase in decorative effect.

In the above description of the various embodiments, it should be understood that the number of magnets inserted in corresponding positions of a spectacle frame and ornament may be freely selected so long as the magnets can achieve a desired magnetic attraction between the spectacle frame and the ornament.

Alternatively, one of the spectacle frame and ornament may be made of a magnetically attractable metallic material to respond to the magnets mounted in the other one.

As apparent from the above description, according to a spectacles and ornament assembly of the present invention, a variety of ornaments having different shapes, designs, colors, and materials, are selectively combined and attached to spectacles in accordance with the wearer's various tastes. As a result, a variety of spectacles and ornament assemblies can be accomplished.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A spectacles and ornament assembly comprising:
Spectacles(50) including a spectacle frame(1) having a bridge(12) connecting a pair of lens frames to each other, a pair of temple arms connected to the spectacle frame (1), and a pair of hinges to connect the respective temple arms to the spectacle frame (1):
at least one ornament selected from among a variety of ornaments having different shapes, designs, colors, and materials; and
a plurality of magnets (M1,M2,M3,M4..m1,m2,m3,m4..) provided at corresponding positions of the spectacle frame or hinge and the ornament to detachably attach the ornament to the spectacle frame or hinge, so as to achieve a variety of spectacle configurations in accordance with the wearer's different tastes.

2. The assembly as set forth in claim 1, wherein the magnets (M1,M2,M3,M4..m1,m2,m3,m4..) include one or more magnets fixedly inserted in the spectacle frame(1) or hinge and one or more magnets fixedly inserted in the ornament.

3. The assembly as set forth in claim 1, wherein each of the magnets (M1,M2,M3,M4..m1,m2,m3,m4..) is inserted to penetrate through the spectacle frame or ornament, or partially inserted to be exposed to the outside only from a front or rear side of the spectacle frame (1) or ornament.

4. The assembly as set forth in claim 1, wherein the magnets (M1,M2,M3,M4..m1,m2,m3,m4..), provided at corresponding positions of the spectacle frame (1) or hinge (15) and the ornament, are horizontally or vertically inserted, respectively, into the spectacle frame (1) or hinge (15) and the ornament, to allow the ornament to be vertically or horizontally attached to the spectacle frame (1) or hinge (15).

5. The assembly as set forth in claim 1, wherein one of the spectacle frame (1) or hinge (15) and the ornament is made of a magnetically attractable metallic material to respond to the magnets mounted in the other one.

6. The assembly as set forth in claim 1, wherein the ornament takes the form of an ornamental frame (100-110) having no lenses and made of a different shape, design, color, and material from those of the spectacle frame (1), the shape of the ornamental frame corresponding to that of the entire spectacle frame (1), an upper portion of the spectacle frame (1), a lower portion of the spectacle frame (1), or other specific portions of the spectacle frame (1).

7. The assembly as set forth in claim 6, wherein the ornamental frame (100-110)is detachably attached to the spectacle frame (1) from a front or rear side of the spectacle frame (1) by use of the magnets (M1,M2,M3,M4..m1,m2,m3,m4..).

8. The assembly as set forth in claim 1, wherein each temple arm (20) has a relatively wide plate shape, and the ornament takes the form of a temple arm ornament (200) configured to be detachably attached to the associated temple arm (20) by use of the plurality of magnets.

9. The assembly as set forth in claim 1, wherein each temple arm (20) has a relatively wide plate shape and is longitudinally formed with an elongated slit (31), and the ornament takes the form of a temple arm ornament (300) configured to be detachably attached to the associated temple arm(20) by use of the plurality of magnets.

10. The assembly as set forth in claim 1, wherein the ornament takes the form of a hinge ornament (400) to be detachably attached to a front or rear surface of an associated one of the hinges (15) by use of the magnets, the hinge ornament (400) having a decorative surface.
